# EUROPÄISCHE PATENTSCHRIFT

(11) **EP 2 567 076 B1**
(45) Veröffentlichungstag und Bekanntmachung des Hinweises auf die Patenterteilung: **14.09.2016**
(21) Anmeldenummer: 11723871.7
(22) Anmeldetag: 03.05.2011
(51) Int. Cl.: F01N 1/08, F16L 55/027, F01N 1/02, F01N 1/04, F01N 1/16

(54) **BREITBANDIG DÄMPFENDE VORRICHTUNG ZUR SCHALLDÄMPFUNG BEI INDUSTRIEEINRICHTUNGEN, GROSSANLAGEN ODER MASCHINEN**
DEVICE WITH BROAD-BAND DAMPING FOR SOUND DAMPING IN INDUSTRIAL FACILITIES, LARGE PLANTS OR MACHINES
DISPOSITIF D'ATTENUATION LARGE BANDE PERMETTANT D'ATTENUER LE BRUIT LIE AUX EQUIPEMENTS INDUSTRIELS, AUX GRANDES INSTALLATIONS OU AUX MACHINES

(30) Priorität: 04.05.2010 DE 202010006419 U
(43) Veröffentlichungstag der Anmeldung: 13.03.2013
(73) Patentinhaber: EmiCo Emission Control Systems GmbH, 76829 Landau (DE)
(72) Erfinder: WAGNER, Horst, 76872 Steinweiler (DE); WOLFF, Robert, 67487 Maikammer (DE)
(74) Vertreter: Patentanwälte Dr. Keller, Schwertfeger
(86) Internationale Anmeldenummer: PCT/EP2011/002192
(87) Internationale Veröffentlichungsnummer: WO 2011/138004

(56) Entgegenhaltungen:
- WO-A1-2008/017112
- DE-B- 1 242 940
- DE-U1- 20 018 689
- US-B1- 6 199 658

## Beschreibung

### Technisches Gebiet:

Die vorliegende Erfindung betrifft eine breitbandig dämpfende Vorrichtung zur Schalldämpfung bei Industrieeinrichtungen, Großanlagen oder Maschinen gemäß dem Oberbegriff des Anspruchs 1.

### Stand der Technik:

Schalldämpfer oder Schallabsorber zur Absorption von Schall bei Industrieeinrichtungen, Großanlagen oder Maschinen sind beispielsweise in der DD 298 151 A5 und der DE 1 242 940 B beschrieben. Die DE 1 242 940 B beschreibt ein rohrförmigen Schalldämpfer mit wenigstens durch drei Querwände gebildeten Kammern mit durch benachbarte und nicht benachbarte Kammern verbindenden Rohren unterschiedlicher Länge, die zumindest zum Teil Wandöffnungen für den Gasdurchtritt aufweisen. Ferner sind ein Eintrittsrohr und ein Austrittsrohr vorgesehen, die mit einer Endkammer in Verbindung stehen. Ähnliche Schalldämpfer kennt man auch aus der CH 370282 A, der AT 233331 B und der DE 917 038 B.

Vorrichtungen zur Dämpfung von Schall werden in der Industrie eingesetzt, um die von den Maschinen erzeugten Geräusche zu vermindern oder ganz zu eliminieren. Einige der bekannten Schalldämpfungsvorrichtungen nutzen die breitbandige akustische Wirksamkeit von Absorptionsmaterial in Form von Glasfaser- und Mineralfaserdämmstoffen, die auf unterschiedliche Art entlang der Strömungskanäle positioniert werden können. Zum Schutz gegen Gaspulsation und als mechanische Befestigung dienen Lochbleche, die oftmals mit zusätzlichen Gewebezwischenlagen ausgerüstet sind. Bei einer starken Gaspulsation besteht jedoch das Risiko, dass das Absorptionsmaterial zumindest teilweise in Eigenbewegung gerät und durch die Dauerbeanspruchung in einzelne Faserteile zerfällt, die durch die Gasströmung in dem Schallabsorber im Laufe der Zeit ausgetragen werden. Durch diesen Prozess verschlechtern sich die akustischen Eigenschaften gegenüber dem Neuzustand. Ein Austausch des Schallabsorbers ist notwendig, was regelmäßig mit einem temporären Stillstand der Maschine und hohen Kosten verbunden ist. Eine weitere Beeinträchtigung der akustischen Eigenschaften beobachtet man, wenn gasförmige Stoffe mit Staub oder anderen Partikeln behaftet sind, die sich im Absorptionsmaterial absetzen. Je nachdem, an welcher Maschine der Schallabsorber eingesetzt wird, reicht die mit den Mineralfaserdämmstoffen bewirkte Dämpfung im tieffrequenten Bereich nicht aus, was insbesondere bei Vorrichtungen der Fall ist, bei denen der tieffrequente Anteil dominant ist.

Eine andere Art von Vorrichtungen zur Schalldämpfung basiert auf unterschiedlich dimensionierten Helmholtz-Resonatoren. Diese sind jedoch schwierig zu dimensionieren und benötigen aufgrund der Kammerbauweise viel zusätzlichen Einbauraum. Eine nachträgliche Feineinstellung ist hierbei sehr aufwändig.

Daneben gibt es Schalldämpfer oder Schallabsorber, die aus einer Vielzahl röhrchenförmiger Resonatoren bestehen, die dem Fachmann auch unter dem Namen "λ/4-Resonatoren" bekannt sind. Eine solche Vorrichtung ist beispielsweise in der GB 203 410 beschrieben, welche zur Dämpfung von Flugzeugtriebwerken verwendet wird. Die darin beschriebenen Resonatoren bestehen aus einer Vielzahl von λ/4-Resonatoren und sind so dicht wie möglich gepackt, um eine möglichst hohe Absorption zu erzielen. Die Resonatoren besitzen Öffnungen, welche mit einem perforierten Blech oder mit einem Faservlies abgedeckt sind. Nach dem ähnlichen Prinzip arbeitet auch die in der DE 94 08 118U beschriebene Vorrichtung, bei der die Öffnungen der einzelnen λ/4-Resonatoren mit einem porösen Schaum, einem Vliesstoff oder einer dünnen Folie abgedeckt sind. Nachteilig ist bei den beschriebenen λ/4-Resonatoren, dass diese nur zu schmalen Resonanzabsorptionskurven führen und keine breitbandige Dämpfung zulassen. In der EP 0 962 013 B1 wird daher ein Schallabsorber vorgeschlagen, bei dem die Bandbreite einstellbar ist. Allerdings ändert auch das darin beschriebene Prinzip nichts daran, dass die Resonanzabsorptionskurven grundsätzlich schmal sind.

Ein weiteres Problem besteht darin, dass sich bei Änderungen der Betriebsbedingungen auch die akustischen Bedingungen zur Schallabsorption ändern, wie z.B. die effektiv vorhandenen Gastemperaturen, die akustische Beeinflussung durch die angekoppelten Leitungen und Bauteile. Auch dadurch kann ein schmalbandig wirkendes Resonanzsystem teilweise oder vollständig akustisch unwirksam sein. Insbesondere bei tieffrequenten Schallanteilen mit hohen Pegeln erreichen diese Vorrichtungen nicht die erwünschte Schallpegelabsenkung.

### Darstellung der Erfindung:

Vor diesem Hintergrund liegt der Erfindung daher die Aufgabe zugrunde, eine Vorrichtung zur Schalldämpfung anzugeben, welche breitbandig dämpft und zugleich an die jeweils herrschenden Betriebsbedingungen der Industrieeinrichtung, Großanlage oder Maschine anpassbar ist.

Diese Aufgabe wird gelöst durch eine breitbandig dämpfende Vorrichtung zur Schalldämpfung mit den Merkmalen des Anspruchs 1.

Bevorzugte Ausführungsformen finden sich in den Unteransprüchen wieder.

Der erfindungsgemäße Schalldämpfer kann ohne Verwendung von Absorptionsmaterialien eine breitbandige Dämpfung insbesondere im tieffrequenten Bereich ohne zusätzlichen Platzbedarf bewirken.

Die erfindungsgemäße Vorrichtung zur Schalldämpfung besteht aus einem Gehäuse mit einem Einlass und einem Auslass für den Abgasstrom, einem in einer zentralen Kammer des Gehäuses angeordneten gasführenden Rohr, welches an der Einlass- und der Auslassseite von Zwischenwänden gehalten wird, wobei in der Kammer zusätzliche Hohlrohre angeordnet sind, welche als Resonanzelemente wirken. In den Hohlrohren befindet sich wenigstens ein Trennelement, das das Hohlrohr in wenigstens einen akustisch wirksamen vorderen Bereich und einen akustisch wirksamen hinteren Bereich einteilt. Die Position der oder des in den Hohlrohren angeordneten Trennelemente(s) ist abhängig von der Frequenzverteilung der Industrieeinrichtung, Großanlage oder Maschine, an der der erfindungsgemäße Schalldämpfer zum Einsatz kommt. Die Trennelemente sind in den Hohlrohren axial verschiebbar, so dass die Dämpfungsfrequenzen am Betriebsort durch Positionierung eingestellt werden können.

Die Kammer, in der sich die Hohlrohre befinden, wird von den Zwischenwänden terminiert. Die Hohlrohre laufen vorzugsweise parallel zur Strömungsrichtung in der Kammer, wodurch die beiden Bereiche des Hohlrohres durch die integrierten Trennelemente und die terminierenden Zwischenwände akustisch voneinander entkoppelt sind.

Vorzugsweise sind mehrere Hohlrohre in der Kammer des Gehäuses integriert, und die Trennelemente sind jeweils an den Stellen in den Hohlrohren positionierbar, an denen die erwünschte Dämpfung in dem jeweiligen Frequenzbereich am größten ist. Dies ist vom Frequenzspektrum der jeweiligen Industrieeinrichtung, Großanlage oder Maschine abhängig. Durch die Auswahl der Anzahl der Rohre, deren Länge und Durchmesser sowie die Positionierung der Trennelemente in den Hohlrohren erreicht man eine breitbandige Dämpfung. Gleichzeitig kommt es zu einer zweifachen akustischen Wirksamkeit durch eine beidseitige Ankopplung jedes Hohlrohres.

Vorzugsweise sind die Hohlrohre in dem Gehäuse zylinderförmig ausgestaltet. Um jedoch die Gesamtlänge der Rohre zu verlängern, können diese auch spiralförmig ausgestaltet sein. Dadurch wird der akustisch wirksame Bereich vergrößert.

Um die akustischen Eigenschaften zu verändern, können die Hohlrohre unterschiedliche Durchmesser und/oder Längen aufweisen. Die Hohlrohre haben vorzugsweise unterschiedliche Ausformungen, beispielsweise können sie oval, rechteckig oder quadratisch sein.

Zum Erreichen einer auf die jeweilige Industrieeinrichtung optimal abgestimmten breitbandigen Dämpfung sind die Trennelemente in dem Hohlrohr vorzugsweise über einen Schieber von außen axial verschiebbar. Der Schieber wird beispielsweise über ein in dem Gehäuse integriertes Führungsglied entweder manuell oder maschinengesteuert geführt. So können die einzelnen Trennelemente in den Hohlrohren bequem von außen positioniert und dadurch die akustische Wirksamkeit optimiert werden.

Bei der Herstellung ist es am einfachsten, wenn das Trennelement durch das Zusammenfügen von zwei getrennten Hohlrohren erzeugt wird, wobei das Ende wenigstens eines Hohlrohres durch das Trennelement verschlossen ist. Beispielsweise können die beiden Hohlrohre durch Verschweißen miteinander verbunden werden, wobei das Trennelement dann an der Schweißstelle angeordnet ist. Diese Ausführungsform ist beispielsweise für eine Serienfertigung geeignet, wenn eine Positionierung der Trennelemente innerhalb der Hohlrohre nicht mehr notwendig ist.

Es sind jedoch auch andere Arten, eine Rohrtrennung herzustellen, möglich, zum Beispiel durch Flachdrücken des Rohres an einer definierten Stelle. Theoretisch können auch mehrere akustische Bereiche wirksam werden, indem mehrere Trennelemente in einem Hohlrohr integriert sind.

Die Hohlrohre befinden sich vorzugsweise in der von den Zwischenwänden definierten Kammer, die den zentralen Bestandteil des Gehäuses ausmacht. Diese Kammer ist zugleich auch als Schnellabsorber ausgeführt. In einer Ausführungsform ist vorgesehen, dass vor und nach der Hauptkammer zwei Nebenkammern im Gehäuse angeordnet sind, die von der Hauptkammer durch die Zwischenwände abgetrennt werden, wobei das gasführende Rohr zu den Nebenkammern offen ist. Die akustischen Eigenschaften werden durch diese beiden Nebenkammern zusätzlich positiv beeinflusst.

Ein Vorteil der erfindungsgemäßen Vorrichtung ist darin zu sehen, dass die tieffrequenten Anteile von Maschinengeräusche ohne zusätzlichen Raumbedarf in einem hohen Maß gedämpft werden. Die Bandbreite kann durch die Anzahl der Rohre, deren Längen und Querschnitte adaptiert werden, wodurch auch ein verschobener oder schwankender Geräuschspiegel eliminiert wird.

Vorzugsweise sind die Hohlrohre und das gasführende Rohr zumindest innerhalb der zentralen Kammer zusätzlich mit Dämmmaterial umhüllt.

Vorzugsweise handelt es sich bei der erwähnten Industrieeinrichtung, Großanlage oder Maschine um einen Kompressor, ein Gebläse, ein Kraftwerk (beispielsweise ein Blockheizkraftwerk) oder einen Antriebsmotor (beispielsweise für ein Schiff, Flugzeug oder Wasserfahrzeug).

### Kurze Beschreibung der Zeichnungen:

Die Erfindung wird in den nachfolgenden Zeichnungen näher erläutert. Es zeigen
- Fig. 1: eine Ausführungsform eines erfindungsgemäßen Schallabsorbers in Seitendarstellung,
- Fig. 2: eine isometrische Darstellung des in Fig. 1 gezeigten Schallabsorbers,
- Fig. 3: einen Schallabsorber mit breitbandiger Dämpfungskapazität auch für den mittleren und hohen Frequenzbereich,
- Fig. 4: eine isometrische Darstellung des in Fig. 3 gezeigten Schallabsorbers,
- Fig. 5: eine Verschiebeeinrichtung zur Positionierung der Trennelemente in dem Resonanzkörper,
- Fig. 6: die in Fig. 5 gezeigte Verschiebeeinrichtung nach erfolgter Justierung.

Wege zur Ausführung der Erfindung und gewerbliche Verwertbarkeit:

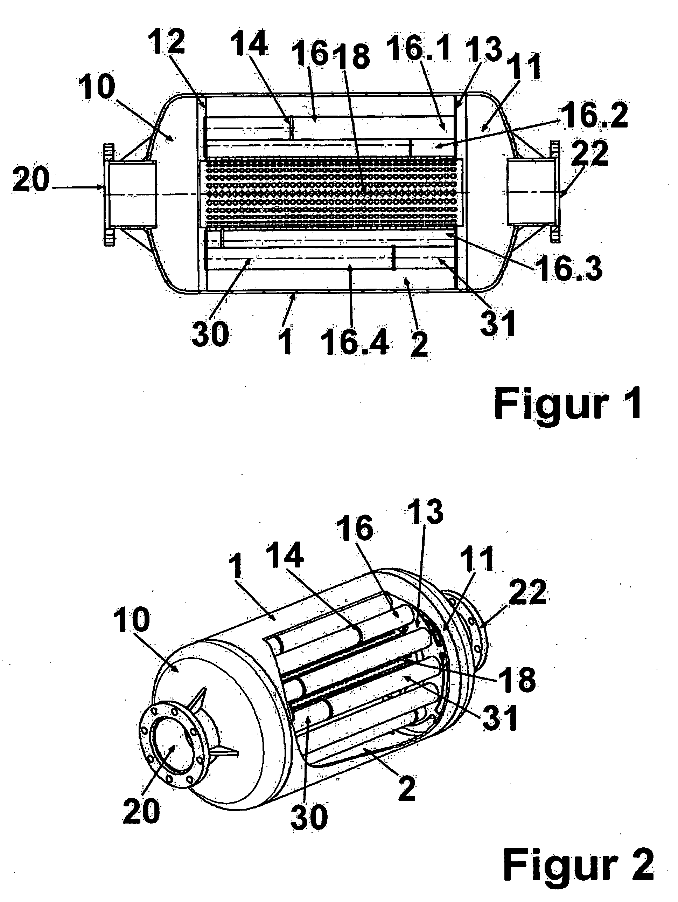

In Fig. 1 ist eine Ausführungsform einer erfindungsgemäßen Vorrichtung zur Schalldämpfung gezeigt. Diese besteht aus einem Gehäuse 1 mit einem Einlass 20 und einem Auslass 22 für den Abgasstrom sowie einer zentralen Kammer 2 mit einem darin angeordneten gasführenden Rohr 18, durch das die Abgase geleitet werden. Die Kammer 2 wird an der Vorder- und Rückseite von Zwischenwänden 12, 13 gebildet. Diese halten gleichzeitig das gasführende Rohr 18. In der Kammer 2, welche als Absorptionsraum wirkt, befinden sich als Resonanzkörper mehrere Hohlrohre 16, in denen jeweils wenigstens ein Trennelement 14 angeordnet ist. Dadurch wird das Hohlrohr in einen akustisch wirksamen vorderen Bereich 30 sowie einen hinteren Bereich 31 eingeteilt. In der gezeigten Ausführungsform sind mehrere Hohlrohre 16.1, 16.2, 16.3, 16.4 in der Kammer 2 angeordnet. Vor und nach der Kammer 2 befinden sich zwei Nebenkammern 10, 11.

In Fig. 2 ist die Anordnung der einzelnen Hohlrohre 16 innerhalb des Gehäuses 1 in der Kammer 2 gezeigt. Die einzelnen Trennelemente 14 sind an unterschiedlichen Positionen zur breitbandigen Dämpfung positioniert, wodurch unterschiedlich große, akustisch wirksame Bereiche 30, 31 entstehen.

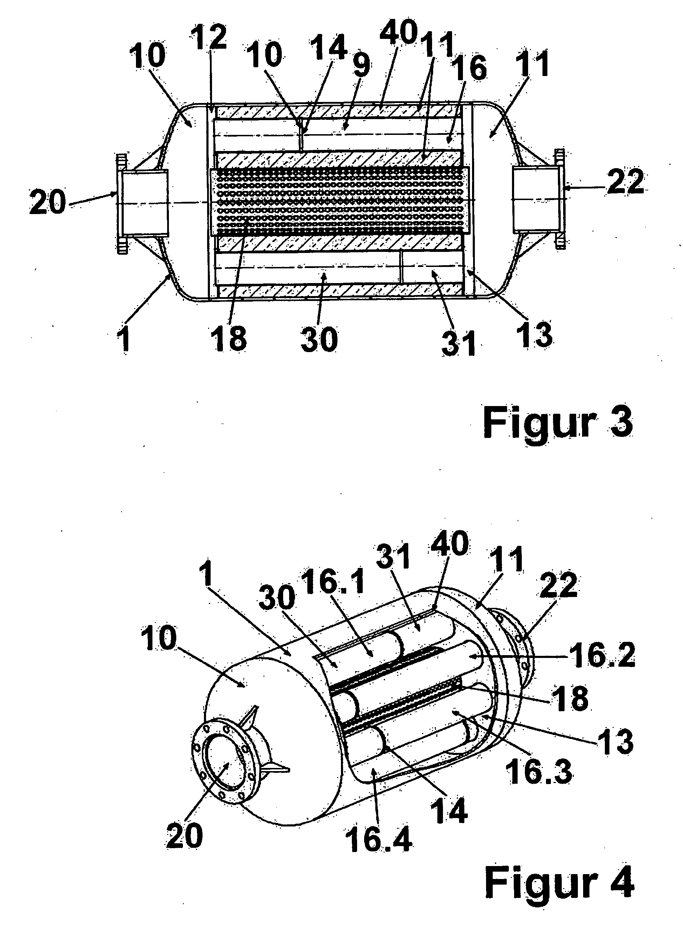

In Fig. 3 ist zur Dämpfung von Schallanteilen im mittleren bis hohen Frequenzbereich zusätzlich vorgesehen, dass die Hohlrohre und/oder das Gehäuse 1 mit einem Dämmmaterial umhüllt sind/ist. Dadurch wird die Gesamtschallabstrahlung über einen sehr breiten Frequenzbereich gedämpft.

In Fig. 4 ist die gleiche Anordnung in isometrischer Darstellung von der Seite gezeigt.

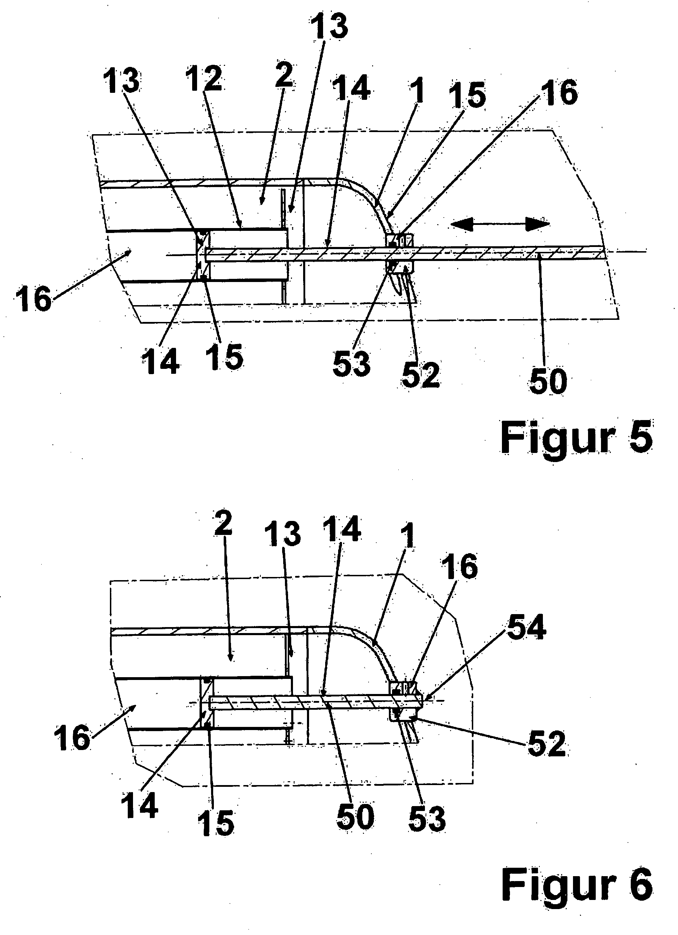

In Fig. 5 ist eine Möglichkeit zur manuellen Verschiebbarkeit der Trennelemente 14 innerhalb des Hohlrohres 16 gezeigt. In der gezeigten Ausführungsform wird das Trennelement 14 über einen Schieber 50 axial in dem Hohlrohr 16 verschoben Zur Führung ist ein Führungsglied 52 mit Fixiergurten 53 vorgesehen. Auch erkennt man, wie das Ende des Hohlrohres 16 durch die Zwischenwand 13 terminiert ist. Der Schieber 50 kann entweder in dem Gehäuse verbleiben, so dass bei einer Änderung der Drehzahl der Maschine eine erneute Anpassung erfolgen kann. Alternativ kann der Schieber 50 auch entfernt und die Öffnung in der Außenhülle des Gehäuses 1 verschlossen werden.

Dies wird in Fig. 6 aufgezeigt. Der Schieber 50 verbleibt in dem Gehäuse 1 und wird nach erfolgter Positionierung des Trennelementes 14 in dem Hohlrohr 16 an dessen Ende 54 abgetrennt. Das Ende 54 kann dann mit der Hülle des Gehäuses 1 verschweißt werden.

Der erfindungsgemäße Schalldämpfer ermöglicht eine wirksame Dämpfung durch Hohlrohre als Resonanzkörper im tieffrequenten Frequenzbereich und eine zusätzliche Dämpfung im mittleren bis hohen Frequenzbereich durch Einsatz von Dämmaterial. Bei breitbandiger Auslegung des erfindungsgemäßen Schallabsorbers kann sogar völlig auf den Einsatz von Dämmmaterial verzichtet werden. Vorteilhaft wirkt sich aus, dass sich die eingesetzten Dämpfungselemente nicht negativ auf den Abgasgegendruck des Systems auswirken. Durch den erwähnten Verschiebemechanismus ist ein akustisches Feintuning an der Maschine jederzeit möglich, so dass auch bei Änderungen der Randbedingungen eine Anpassung der akustischen Eigenschaften des Schallabsorbers erfolgen kann.

## Patentansprüche

1. Breitbandig dämpfende Vorrichtung zur Schalldämpfung bei Industrieeinrichtungen, Großanlagen oder Maschinen, bestehend aus einem Gehäuse (1) mit einem Einlass (20) und einem Auslass (22) für den Abgasstrom, einem in einer zentralen Kammer (2) des Gehäuses (1) angeordneten gasführenden Rohr (18), welches an der Einlassseite und der Auslassseite von Zwischenwänden (12, 13) gehalten wird, **dadurch gekennzeichnet, dass** in der Kammer (2) zusätzliche Hohlrohre (16) angeordnet sind, in denen wenigstens ein Trennelement (14) derart positioniert ist, dass das Hohlrohr (16) in wenigstens einen akustisch wirksamen vorderen Bereich (30) und einen hinteren Bereich (31) eingeteilt wird.

2. Vorrichtung nach Anspruch 1, **dadurch gekennzeichnet, dass** die Kammer (2) von den Zwischenwänden (12, 13) terminiert wird.

3. Vorrichtung nach Anspruch 1 oder 2, **dadurch gekennzeichnet, dass** die Hohlrohre (16) parallel zur Strömungsrichtung in der Kammer (2) verlaufen und die beiden Bereiche (30, 31) des Hohlrohres (16) durch das integrierte Trennelement (14) und die terminierenden Zwischenwände (12, 13) akustisch voneinander entkoppelt sind.

4. Vorrichtung nach einem der vorhergehenden Ansprüche, **dadurch gekennzeichnet, dass** mehrere Hohlrohre (16) in der Kammer (2) des Gehäuses (1) integriert sind und dass die Trennelemente (14) an den Stellen in den Hohlrohren (16) positionierbar sind, an denen die erwünschte breitbandige Dämpfung in dem jeweiligen Frequenzbereich am größten ist.

5. Vorrichtung nach einem der vorhergehenden Ansprüche, **dadurch gekennzeichnet, dass** die Hohlrohre (16) in dem Gehäuse (1) zylinderförmig und/oder spiralförmig ausgestaltet sind.

6. Vorrichtung nach einem der vorhergehenden Ansprüche, **dadurch gekennzeichnet, dass** die Hohlrohre (16) unterschiedliche Querschnittsformen haben.

7. Vorrichtung nach einem der vorhergehenden Ansprüche, **dadurch gekennzeichnet, dass** die Hohlrohre (16) unterschiedliche Durchmesser und/oder Längen aufweisen.

8. Vorrichtung nach einem der vorhergehenden Ansprüche, **dadurch gekennzeichnet, dass** die Trennelemente (14) in dem Hohlrohr (16) über einen Schieber (50) von außen axial verschiebbar sind.

9. Vorrichtung nach Anspruch 8, **dadurch gekennzeichnet, dass** der Schieber (50) über ein in dem Gehäuse (1) integriertes Führungsglied (52) manuell oder maschinengesteuert geführt wird.

10. Vorrichtung nach einem der vorhergehenden Ansprüche, **dadurch gekennzeichnet, dass** das Ende wenigstens eines Hohlrohres (16) durch ein Trennelement (14) verschlossen ist.

11. Vorrichtung nach einem der vorhergehenden Ansprüche, **dadurch gekennzeichnet, dass** ein Hohlrohr (16) mehr als ein Trennelement (14) enthält.

12. Vorrichtung nach einem der vorhergehenden Ansprüche, **dadurch gekennzeichnet, dass** vor und nach der Hauptkammer (2) zwei Nebenkammern (10, 11) im Gehäuse (1) angeordnet sind, die von der Hauptkammer (2) durch die Zwischenwände (12, 13) abgetrennt werden, wobei das gasführende Rohr (18) zu den Nebenkammern (10, 11) offen ist.

13. Vorrichtung nach Anspruch 12, **dadurch gekennzeichnet, dass** die Hohlrohre (16) mit ihren Enden in die Nebenkammern (10, 11) hineinragen.

14. Vorrichtung nach einem der vorhergehenden Ansprüche, **dadurch gekennzeichnet, dass** die Hohlrohre (16) und das gasführende Rohr (18) zumindest innerhalb der Kammer (2) zusätzlich mit Dämmmaterial (40) umhüllt sind.

15. Vorrichtung nach einem der vorhergehenden Ansprüche, **dadurch gekennzeichnet, dass** es sich bei der Industrieeinrichtung oder Großanlage um einen Kompressor, ein Gebläse, ein Kraftwerk oder einen Antriebsmotor handelt.

## Claims

1. Wideband absorption device for sound absorption in industrial facilities, large-scale plants or machines, consisting of a housing (1) having an inlet (20) and an outlet (22) for the waste gas flow, a gas-carrying pipe (18) that is arranged in a central chamber (2) of the housing (1) and is held on the inlet side and on the outlet side by partition walls (12, 13), **characterised in that** additional hollow pipes (16) are arranged in the chamber (2), in which pipes at least one separating element (14) is positioned such that the hollow pipe (16) is divided into at least one acoustically effective front region (30) and a rear region (31).

2. Device according to claim 1, **characterised in that** the chamber (2) is terminated by the partition walls (12, 13).

3. Device according to either claim 1 or claim 2, **characterised in that** the hollow pipes (16) extend in the chamber (2) in parallel with the flow direction and the two regions (30, 31) of the hollow pipe (16) are acoustically decoupled from one another by the integrated separating element (14) and the terminating partition walls (12, 13).

4. Device according to any of the preceding claims, **characterised in that** a plurality of hollow pipes (16) are integrated in the chamber (2) of the housing (1), and **in that** the separating elements (14) can be positioned in the hollow pipes (16) at the points where the desired wideband absorption in the particular frequency range is the highest.

5. Device according to any of the preceding claims, **characterised in that** the hollow pipes (16) in the housing (1) are cylindrical and/or helical.

6. Device according to any of the preceding claims, **characterised in that** the hollow pipes (16) have different cross-sectional shapes.

7. Device according to any of the preceding claims, **characterised in that** the hollow pipes (16) have different diameters and/or lengths.

8. Device according to any of the preceding claims, **characterised in that** the separating elements (14) in the hollow pipe (16) can be axially displaced from the outside by means of a slide (50).

9. Device according to claim 8, **characterised in that** the slide (50) can be guided either manually or in a machine-controlled manner by means of a guide member (52) integrated in the housing (1).

10. Device according to any of the preceding claims, **characterised in that** the end of at least one hollow pipe (16) is closed by a separating element (14).

11. Device according to any of the preceding claims, **characterised in that** one hollow pipe (16) contains more than one separating element (14).

12. Device according to any of the preceding claims, **characterised in that** two auxiliary chambers (10, 11) are arranged in the housing (1), upstream and downstream of the main chamber (2), and are isolated from the main chamber (2) by the partition walls (12, 13), the gas-carrying pipe (18) being open towards the auxiliary chambers (10, 11).

13. Device according to claim 12, **characterised in that** the ends of the hollow pipes (16) protrude into the auxiliary chambers (10, 11).

14. Device according to any of the preceding claims, **characterised in that** the hollow pipes (16) and the gas-carrying pipe (18) are additionally encased by insulating material (40) at least inside the chamber (2).

15. Device according to any of the preceding claims, **characterised in that**, in industrial facilities or large-scale plants, said device is a compressor, a fan, a power plant or a drive motor.

## Revendications

1. Dispositif d'atténuation à large bande, dévolu à l'atténuation de bruits dans des équipements industriels, des installations de grande taille ou des machines, comprenant un boîtier (1) muni d'une admission (20) et d'une sortie (22) dédiées au flux de gaz d'échappement, et une tubulure (18) de guidage des gaz qui est logée dans une chambre centrale (2) dudit boîtier (1) et est retenue par des parois intermédiaires (12, 13) côté admission et côté sortie, **caractérisé par le fait que** la chambre (2) contient des tubes additionnels (16) dans lesquels au moins un élément de séparation (14) est positionné de telle sorte que le tube (16) soit au moins scindé en une région antérieure (30) à action acoustique, et en une région postérieure (31).

2. Dispositif selon la revendication 1, **caractérisé par le fait que** les parois intermédiaires (12, 13) marquent les extrémités de la chambre (2).

3. Dispositif selon la revendication 1 ou 2, **caractérisé par le fait que** les tubes (16) s'étendent parallèlement à la direction de l'écoulement, dans la chambre (2), et les deux régions (30, 31) du tube (16) sont découplées acoustiquement l'une de l'autre par l'élément intégré de séparation (14), et par les parois intermédiaires (12, 13) marquant les extrémités.

4. Dispositif selon l'une des revendications précédentes, **caractérisé par le fait que** plusieurs tubes (16) sont intégrés dans la chambre (2) du boîtier (1) ; et **par le fait que** les éléments de séparation (14) peuvent être positionnés, dans lesdits tubes (16), dans les zones dans lesquelles l'atténuation à large bande souhaitée est maximale dans la plage de fréquence considérée.

5. Dispositif selon l'une des revendications précédentes, **caractérisé par le fait que** les tubes (16) sont de configuration(s) cylindrique et/ou spiroïdale dans le boîtier (1).

6. Dispositif selon l'une des revendications précédentes, **caractérisé par le fait que** les tubes (16) présentent des configurations de section transversale différentes.

7. Dispositif selon l'une des revendications précédentes, **caractérisé par le fait que** les tubes (16) présentent des diamètres et/ou des longueurs différent(e)s.

8. Dispositif selon l'une des revendications précédentes, **caractérisé par le fait que** les éléments de séparation (14) peuvent coulisser axialement depuis l'extérieur, dans le tube (16), par l'intermédiaire d'un coulisseau (50).

9. Dispositif selon la revendication 8, **caractérisé par le fait que** le coulisseau (50) est guidé, en mode manuel ou commandé automatiquement, par l'intermédiaire d'un organe de guidage (52) intégré dans le boîtier (1).

10. Dispositif selon l'une des revendications précédentes, **caractérisé par le fait que** l'extrémité d'au moins un tube (16) est obturée par un élément de séparation (14).

11. Dispositif selon l'une des revendications précédentes, **caractérisé par le fait qu'**un tube (16) renferme plus d'un élément de séparation (14).

12. Dispositif selon l'une des revendications précédentes, **caractérisé par le fait que** deux chambres auxiliaires (10, 11), situées avant et après la chambre principale (2) dans le boîtier (1), sont séparées d'avec ladite chambre principale (2) par les parois intermédiaires (12, 13), la tubulure (18) de guidage des gaz étant ouverte en direction desdites chambres auxiliaires (10, 11).

13. Dispositif selon la revendication 12, **caractérisé par le fait que** les tubes (16) s'engagent par leurs extrémités dans les chambres auxiliaires (10, 11).

14. Dispositif selon l'une des revendications précédentes, **caractérisé par le fait que** les tubes (16) et la tubulure (18) de guidage des gaz sont additionnellement enrobés d'un matériau isolant (40), au moins à l'intérieur de la chambre (2).

15. Dispositif selon l'une des revendications précédentes, **caractérisé par le fait que** l'équipement industriel ou l'installation de grande taille se présente comme un compresseur, une soufflerie, une centrale électrique ou un moteur d'entraînement.
